# EUROPEAN PATENT APPLICATION

(11) **EP 0 800 887 A1**
(43) Date of publication of application: **15.10.1997**
(21) Application number: 96935438.0
(22) Date of filing: 24.10.1996
(51) Int. Cl.: B23K 11/24

(54) **SPOT WELDING MACHINE SELECTIVELY USING A PLURALITY OF SERVO GUNS**

(30) Priority: 24.10.1995 JP 298897/95
(71) Applicant: FANUC LTD., Minamitsuru-gun, Yamanashi 401-05 (JP)
(72) Inventor: WATANABE, Atsushi, N-3, Fanuc Haitsufuji, Minamitsuru-gun, Yamanashi 401-05 (JP); HARA, Ryuichi, Fujiyoshida-shi, Yamanashi 403 (JP)
(74) Representative: Billington, Lawrence Emlyn
(86) International application number: JP9603112
(87) International publication number: WO9715416

(57) **Abstract**

A spot welding apparatus which eliminates a necessity of performing an operation for returning to an origin at the time of changing servo guns. A servo gun selected from a plurality of servo guns G1-G4 is mounted on a robot 1, and a connector CN1 of the selected servo gun G1 is connected with a connector CN10 of a controller 10. Gun axes are driven by respective servomotors M1-M4 each equipped with an absolute pulse coder using a magnetic bubble device. An electric current supplied to the gun G1 in use is determined by a current command which is generated in accordance with a motion command for the gun axis based on an operation program, and a feedback signal obtained from the absolute pulse coder. When the gun G1 is put to use after another gun G2, G3 or G4 is used, position data regarding the gun axis of the gun G1, inclusive of movement of the gun axis while the gun is not in service, can be retained.

## Description

### Technical Field

The present invention relates to a welding apparatus for carrying out a spot welding by selectively using a plurality of servo guns, and more particularly to a welding apparatus which does not need an operation for returning to an origin. The present invention is advantageous when applied to a welding system having a robot on which a plurality of servo guns are selectively mounted.

### Background Art

As a welding gun for spot welding, there is known a gun using a servomotor for driving a pressure welding mechanism which brings the electrodes facing each other into a pressure contact with a workpiece, and it is generally called a servo gun. The conventional servo gun adopts an absolute pulse coder, which needs battery backup, as a position detector for a control of an axis (gun axis) of the pressure welding mechanism. The gun axis is controlled by a controller connected to the servo gun based on an output from the absolute pulse coder.

In many of actual spot welding apparatuses adopting such servo guns, two or more servo guns are prepared to cope with different types and sizes of workpieces, welding conditions, etc., and a servo gun to be connected to the controller is selected as needed. In this case, however, a problem arises in that a cable for connecting a backup battery provided in a robot with a pulse coder of the servo gun is disconnected when the servo gun is changed, and therefore position data of the gun axis is lost.

When a servo gun once disconnected is used next time, an operation for returning to its origin is required in order to obtain the position data of the gun axis. In the return-to-origin operation, the gun axis is returned to an origin position by a manual operation and the origin position is taught to the controller. This operation imposes a burden on an operator and causes an increase in the cycle time. Also, a limit switch or the like for detecting the return of the gun axis to the origin position is necessary, which is not advantageous in view of cost.

### Disclosure of Invention

An object of the present invention is to improve a spot welding system having a plurality of servo guns to eliminate the necessity of operation for returning to an origin at the time of changing the servo guns and also to remove the cause of increase of the operator's burden and of the cycle time.

According to the present invention, an absolute pulse coder is used for detecting and storing the absolute number of rotations of an output shaft of each servomotor while the servo gun associated with each servomotor is disconnected with gun axis control means, as a position detector for a servo control of the gun axes of a plurality of servo guns which are selectively used. The absolute pulse coder is provided at a detection shaft coupled to the output shaft of each servomotor for driving the gun axis.

A batteryless type of absolute pulse coder using a magnetic bubble device can be employed. The pulse coder using a magnetic bubble device includes a magnetic mechanism using a magnetic bubble device for absolutely detecting and storing the number of rotations of the detection shaft, and an optical mechanism for absolutely detecting an angular position of the detection shaft within one rotation.

In many of general welding systems, a servo gun is used by mounting it on a robot. In such case, a controller for controlling robot axes can be serve as a controller for controlling the servo gun.

After a gun for use is selected from a plurality of servo guns, it is connected with the controller through a suitable connector. In the case where the gun is used by mounting it on a robot, the robot controller is equipped with an amplifier for the gun axis for using it as gun axis control means. The gun axis of the servo gun in use is driven by a servomotor with the batteryless absolute pulse coder using the magnetic bubble device.

An electric current to be supplied to the gun in use is determined by a current command which is generated in every predetermined period in accordance with a motion command for the gun axis, which is generated based on an operation program, and a feedback signal obtained from the absolute pulse coder. The absolute pulse coder used in the present invention retains a function of absolutely detecting/storing the number of rotations of the detection shaft even after the gun on which the pulse coder is mounted is disconnected with the controller, and never loses position data of the gun axis, thereby requiring no operation for returning to the origin when the gun is put to use again.

### Brief Description of Drawings

FIG. 1 is a schematic diagram illustrating an arrangement of a spot welding machine according to an embodiment of the present invention;
FIG. 2 is a perspective view showing the arrangement of main components of an absolute pulse coder having optical and magnetic detection mechanisms;
FIG. 3 is an enlarged view showing a principal part of the optical detection mechanism of the pulse coder as shown in FIG. 2;
FIG. 4 is an enlarged view of a principal part of the magnetic detection mechanism, which uses a magnetic bubble device, of the pulse coder as shown in FIG. 2;
FIGS. 5a through 5d are diagrams illustrating how a magnetic bubble transfers from one cell to another in the magnetic bubble device due to a rotating magnetic field; and
FIG. 6 is a diagram illustrating a principle of detecting and storing an absolute number of rotations by means of three series of cell groups of the magnetic bubble device.

### Best Mode of Carrying out the Invention

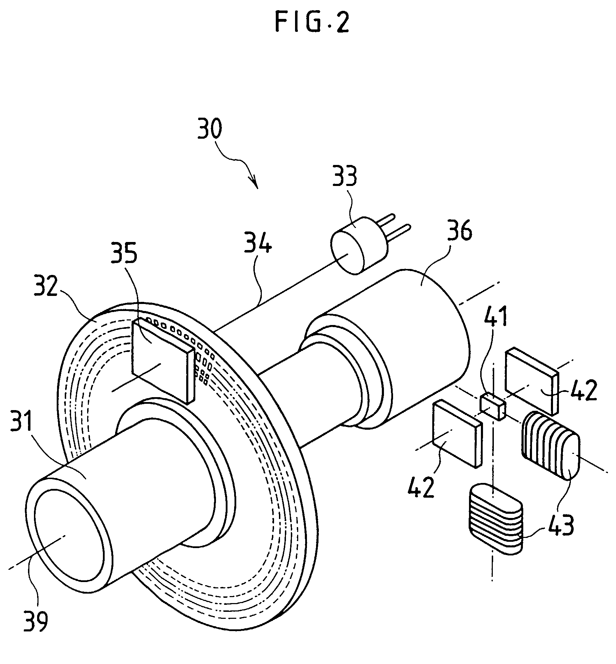

In an embodiment shown in FIG. 2, a plurality of servo guns are selectively mounted on a robot, and gun axes of the servo guns are controlled by a controller for controlling the robot.

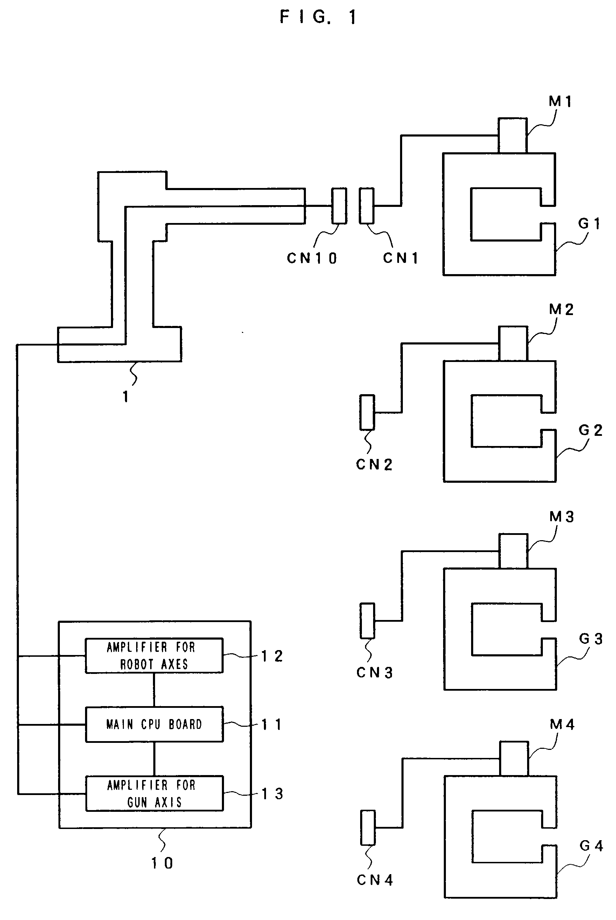

As shown in FIG. 1, a welding system comprises a robot 1, four servo guns G1 to G4, and a controller 10 for controlling the whole system. The servo guns G1 to G4 respectively comprise servomotors M1 to M4, each equipped with a batteryless absolute pulse coder, as a driving means for driving the corresponding gun axis, and connectors CN1 to CN4 to be connected to a connector CN10 of the controller 10.

In this embodiment, only one servo gun is mounted at a time on the robot 1, and a servo gun which has been selected in accordance with a workpiece type etc. is mounted on a distal end of an arm of the robot 1 by manual operation or through the operation of an automatic changer, with its connector coupled to the connector CN10 of the controller 10. FIG. 1 conceptually illustrates the state in which the connector CN1 of the servo gun G1 is connected with the connector CN10.

Like an ordinary robot controller, the controller 10 comprises a main board 11 having a CPU, a ROM, a RAM, etc. The main board 11 is connected with an amplifier 12 for individual axes of the robot 1, as well as with an amplifier 13 for the servo gun. The amplifier 12 supplies a driving current to servomotors for driving the respective robot axes, while the amplifier 13 supplies a driving current to that servomotor (M1 in FIG. 1) for driving the gun axis of the servo gun currently connected to the connector CN10 of the controller 10.

The driving current supplied from the robot axis-driving amplifier 12 to the individual axes is determined by a current command which is generated in every predetermined period by the CPU of the main board 11 according to a servo control method well known in the art. At that time, feedback signals obtained from pulse coders, which are associated with the respective robot axes, are used.

Similarly, the driving current supplied from the gun axis-driving amplifier 13 to the gun axis is determined by a current command which is generated at every predetermined period by the CPU of the main board 11. This current command is determined by a motion command for the gun axis, which is generated in accordance with an operation program defining opening/closing motions of the pressure welding mechanism of the servo gun, and a feedback signal obtained from the batteryless absolute pulse coder connected to the motor for driving the gun axis.

The use of a batteryless absolute pulse coder as the pulse coder for the gun axis is the most significant feature of the present invention. Specifically, the batteryless absolute pulse coder has a function of retaining position data even if it is disconnected with the power supply. Accordingly, once an operation of returning to an origin is performed to teach the controller 10 a position of the orign, an accurate feedback signal can be immediately output to the controller 10 without the operation of returning to the origin even after the power supply is cut off.

A pulse coder using a magnetic bubble device is employed as the batteryless absolute pulse coder. Referring to FIGS. 2-6, the absolute pulse coder using a magnetic bubble device will be explained.

As shown in FIG. 2, a pulse coder 30 comprises a detection shaft 31 coupled directly or indirectly to an output shaft of the servomotor for driving the gun axis. A code disk 32 and a ring magnet 36 are fitted on the detection shaft 31 and are rotated about an axis 39 together with the detection shaft 31.

An LED 33 for emitting a detection light 34 and a photodetector array (PDA) 35 for read operation are arranged with the code disk 32 of an optical type therebetween. The optical detection mechanism composed of these elements detects an absolute position of the detection shaft 31 and the code disk 32 within one rotation thereof, as described later.

A magnetic detection/storage mechanism using a magnetic bubble device is arranged in the vicinity of the ring magnet 36 fitted on the detection shaft 31. This magnetic detection mechanism comprises a magnetic bubble device 41, and bias magnets 42 and coils 43 disposed in align around the magnetic bubble device 41, and absolutely measures and stores the number of rotations of the detection shaft 31 and the ring magnet 36, as described in detail later.

Thus, the batteryless absolute pulse coder 30 is composed of the optical detection mechanism for detecting the absolute rotational position of the detection shaft within one rotation and the magnetic detection mechanism for absolutely measuring and storing the rotational position of the detection shaft 31 in terms of the number of rotations. The optical and the magnetic detection mechanisms will be hereinafter described in more detail.

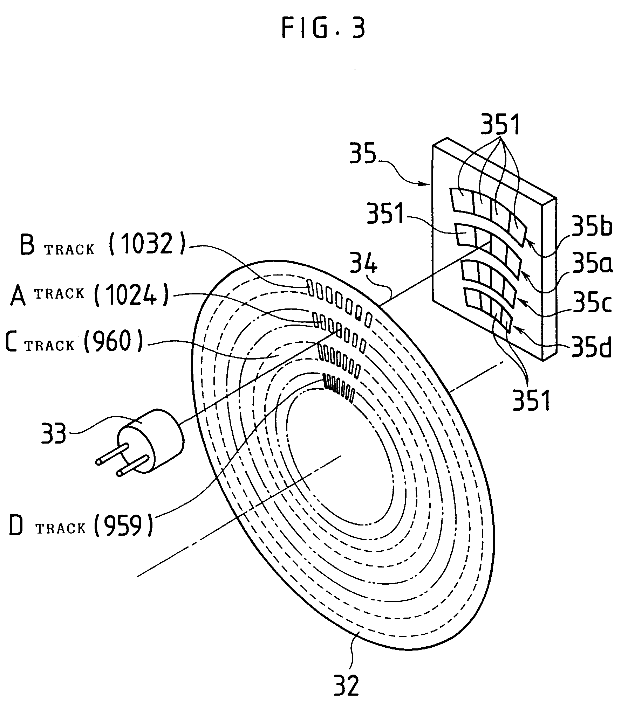

FIG. 3 is an enlarged view of a principal part of the optical detection mechanism of the pulse coder shown in FIG. 2. It is to be noted that in FIGS. 2 and 3, circular rows of slits are indicated by broken lines, except for part thereof. As shown in FIG. 3, the optical code disk 32 has four concentric circular rows of slit tracks, and the detection light 34 from the LED 33 falls upon the photodetector array (PDA) 35 for reading through the slit tracks.

In this embodiment, a B track, an A track, a C track and a D track are formed in the order from the outer periphery of the code disk 32. As indicated in the figure, the B track includes 1032 slits, the A track includes 1024 slits, the C track includes 960 slits and the D track includes 959 slits.

The photodetector array (PDA) 35 has four rows of detecting sections 35b, 35a, 35c and 35d, corresponding to the arrangement of the code disk 32, and each detecting section is divided into four detection segments 351. The outermost detecting section 35b detects the detection light 34 passing through the radially outermost B track. Similarly, the detecting sections 35a, 35c and 35d detect the detection light 34 passing through the A, C and D tracks, respectively.

The absolute rotational position of the code disk 32 within one rotation (360 degrees) is determined based on the combination of the quantities of light (each compared with a threshold value) detected by the four detection segments 351 of each detecting section. A method of detecting the absolute rotational position within one rotation (360 degrees) with this arrangement is well known in the art, and therefore details of the principle of the detection process are omitted here.

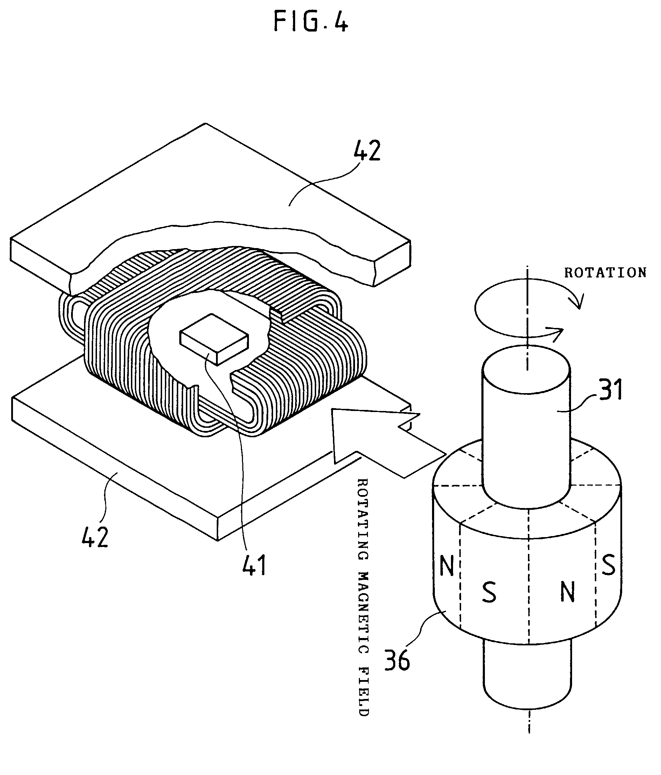

Referring to FIGS. 4-6, the magnetic detection/storage mechanism will be explained. FIG. 4 is an enlarged view of a principal part of the magnetic detection/storage mechanism of the pulse coder shown in FIG. 2. As seen from the enlarged view of FIG. 4, the magnetic detection/storage mechanism comprises the ring magnet 36, the magnetic bubble device 41 arranged in the vicinity of the ring magnet 36, the bias magnets 42 arranged in align around the magnetic bubble device 41, and the coils 43.

The ring magnet 36 fitted on the detection shaft 31 has a plurality of magnetic poles (N poles/S poles) formed alternately in respective regions equally divided in the circumferential direction. Accordingly, as the detection shaft 31 rotates, a rotating magnetic field act on the magnetic bubble device 41 surrounded by the bias magnets 42 and the coils 43 due to an interaction between a magnetic field produced by the bias magnets 42 and the coils 43.

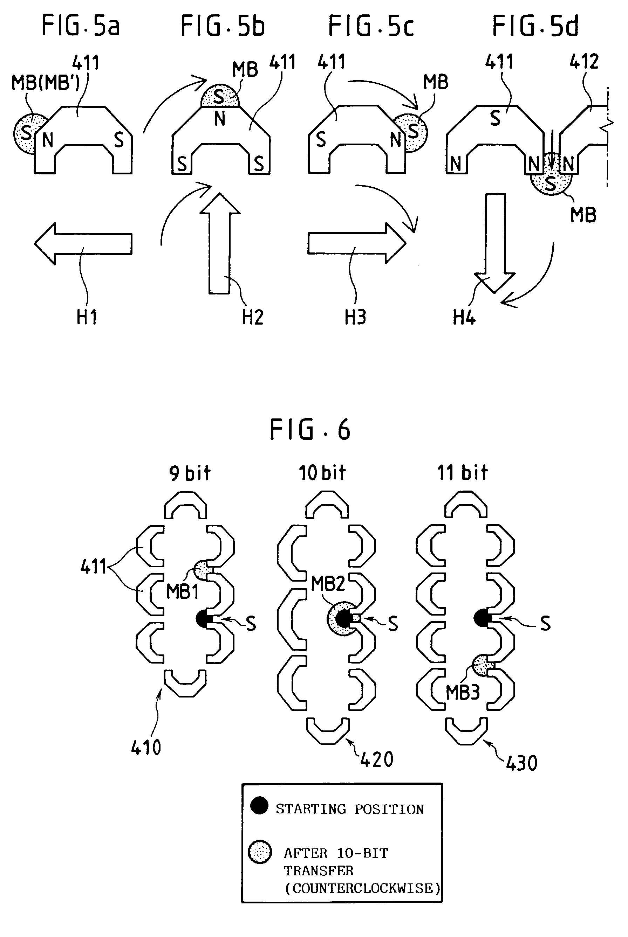

FIG. 5 illustrates a transfer of a magnetic bubble from one cell to another in the magnetic bubble device 41 due to the rotating magnetic field, and FIG. 6 illustrates a principle of storing the absolute number of rotations of the detection shaft 31 (rotating magnetic field) by means of three series of cell groups of the magnetic bubble device 41.

Referring to FIG. 6, the magnetic bubble device 41 used in this embodiment comprises three series of cell groups 410, 420 and 430. Each cell 411 stores one bit of information depending on the presence or absence of a magnetic bubble MB. Each series is provided with one magnetic bubble MB, and the magnetic bubble MB transfers from one cell to another in each series due to the aforementioned action of the rotating magnetic field.

FIGS. 5a-5d show respective positions of the magnetic bubble MB when the magnetic field rotates right-handedly (clockwise) in units of 1/4 rotation (90°) with the rotation of the detection shaft 31. In FIGS. 5a-5d, arrows H1-H4 show a transition of the magnetic field with the rotation of tile detection shaft 31.

As the magnetic field rotates by 3/4 of one rotation from the state shown in FIG. 5a, the magnetic bubble MB transfers from one end of one cell 411 to the other end thereof (one end of an adjacent cell 412). With a further 1/4 rotation of the magnetic field, the magnetic bubble MB transfers to the adjacent cell 412. Namely, as the magnetic field further rotates by 90° from the state shown in FIG. 5d so that the direction of the magnetic field becomes identical with arrow H1 shown in FIG. 5a, the magnetic bubble MB moves to a position on the next cell 412 equivalent to the position (indicated by symbol MB') on the cell 411 shown in FIG. 5a. In this manner, the magnetic bubble MB is transferred successively to an adjacent cell with every one rotation of the magnetic field. When the rotating direction of the detection shaft 31 is reversed and thus the rotating direction of the magnetic field is reversed (in order of H4→H3→ H2→H1), the moving direction of the magnetic bubble MB is also reversed, so that a transfer in the opposite direction (direction of the cell 412→the cell 411) takes place.

Referring again to FIG. 6, each of the three series of cell groups 410, 420 and 430 comprises a plurality of cells 411 arranged in the form of a loop. The numbers N1, N2 and N3 of bits of the respective series are selected so that they may have no common divisor. In the example shown in FIG. 6, N1 = 9, N2 = 10 and N3 = 11, and the numbers of cells included in the respective cell groups 410, 420 and 430 are equal to values smaller by one than the respective numbers of bits, that is, 8, 9 and 10, respectively. With the above arrangement of the magnetic bubble device 41, it is possible to absolutely store the number of rotations up to (N1 × N2 × N3 - 1).

This will be explained with respect to the example shown in FIG. 6. It is assumed that magnetic bubbles MB1-MB3 of the respective series are located at positions indicated by symbol S at the origin (number of rotations = 0), and that the detection shaft 31 starts rotating (see FIG. 2). It is also assumed that the magnetic field rotates in a direction such that the magnetic bubbles MB1-MB3 of the respective series are transferred left-handedly, that is, the rotating direction of the magnetic field is counterclockwise which is opposite to that shown in FIG. 5.

Each time the magnetic field makes one complete rotation in the counterclockwise direction with the rotation of the detection shaft 31, the magnetic bubbles MB1-MB3 of the respective series 410-430 transfer to an adjacent cell in the counterclockwise direction, in accordance with the transfer process shown in FIG. 5. However, when each magnetic bubble moves to pass a corner where two cells arranged in different directions meet, the phase of transfer of the magnetic bubble is delayed by 1/4 rotation (90°) with respect to the rotation of the magnetic field. Accordingly, when the magnetic field rotates nine times (rotation corresponding to 9 bits), for example, the magnetic bubble in the cell series 410 completes one revolution along the cells. After a rotation corresponding to 10 bits, the magnetic bubble MB1 in the series 410 of a 9-bit structure reaches a position which is one bit ahead of the origin S. In the series 420 of a 10-bit structure, the magnetic bubble MB2 returns to the origin S, and in the series 430 of an 11-bit structure, the magnetic bubble MB3 reaches a position which is one bit before the origin S.

The magnetic bubbles MB1-MB3 of the three series of loops can be positioned in 9 × 10 × 11 different combinations, and after 990 rotations, the magnetic bubbles MB1-MB3 of all three series return to their respective origns S. Thus, the bit arrangement shown in FIG. 6 constitutes a register for counting the number of rotations up to a saturation value of 989. Needless to say, none of the preservation, transfer and positional retention of the magnetic bubbles MB1-MB3 require any supply of electric power.

These characteristics are extremely advantageous in applying it to the position detector for detecting the position of the gun axis of a servo gun. Specifically, in the system shown in FIG. 1, the gun axes of the guns G2-G4 which are not mounted on the robot 1 are very likely to be moved by an external force when, for example, an operator touches the guns. By using a servomotor equipped with a pulse coder adopting the magnetic bubble device 41 described above, it is possible to accurately detect and store an unpredictable amount of movement of the gun axis caused while the gun is not in service (while the gun is disconnected with the controller 10).

When the gun G2-G4 is put to use or when the gun G1 is again put to use (at the time of connection with the controller 10), the number of rotations corresponding to the positions of the magnetic bubbles in the respective series 410 to 430 of the magnetic bubble device 41 and the angular position within one rotation corresponding to the rotational position of the aforementioned code disk 32 are immediately detected, to provide an accurate feedback signal to the position loop or speed loop of the servo control system of the controller 10.

In the foregoing embodiment, the system is made up of one robot and four spot guns, but the present invention can of course be applied to a system including two or three spot guns, or five or more spot guns. Also, instead of the system in which a selected gun is mounted on the robot, a system may be constructed such that a plurality of stationary guns are switched for use. Further, according to circumstances, the present invention may be applied to a system without using any robot.

Furthermore, the absolute pulse coder may be of any desired type insofar as it has the function of absolutely detecting/storing the number of rotations of the detection shaft and the function of absolutely detecting the position of the detection shaft within one rotation. Also, a backup circuit including a battery may be provided in each servo gun so that the absolute pulse coder may be backed up at the time of switching the servo guns. Further, as the mechanism for absolutely detecting the position of the detection shaft within one rotation, a magnetic type may be used instead of the optical type.

According to the present invention, the operation for returning to an origin is not required at the time of switching servo guns, whereby the burden on the operator is reduced and the cycle time is shortened.

## Claims

1. A spot welding apparatus selectively using a plurality of servo guns, comprising:
gun axis control means for controlling a gun axis of a servo gun;
a plurality of servo guns selectively connected with said gun axis control means;
servomotors for driving the respective gun axes of said plurality of servo guns; and
an absolute pulse coder coupled to each of said servomotors, for detecting and storing the absolute number of rotations of an output shaft of said each servomotor while the servo gun associated with said each servomotor is disconnected with said gun axis control means.

2. The spot welding apparatus according to claim 1, wherein said absolute pulse coder is a batteryless type, and comprises a magnetic mechanism using a magnetic bubble device for absolutely detecting and storing the number of rotations of said output shaft and a mechanism for absolutely detecting a rotational position of said output shaft within one rotation.

3. A spot welding apparatus selectively using a plurality of servo guns, comprising:
gun axis control means for controlling a gun axis of a servo gun;
a plurality of servo guns selectively connected with said gun axis control means;
a robot capable of mounting at least one servo gun thereon;
robot axis control means for controlling individual axes of said robot;
servomotors for driving the respective gun axes of said plurality of servo guns; and
an absolute pulse coders coupled to each of said servomotors, for detecting and storing the absolute number of rotations of an output shaft of said each servomotor while the servo gun associated with said each servomotors is disconnected with said gun axis control means.

4. The spot welding apparatus according to claim 3, wherein said absolute pulse coder is a batteryless type, and comprises a magnetic mechanism using a magnetic bubble device for absolutely detecting and storing the number of rotations of said output shaft and a mechanism for absolutely detecting a rotational position of said output shaft within one rotation.
